# EUROPÄISCHE PATENTSCHRIFT

(11) **EP 3 626 491 B1**
(45) Veröffentlichungstag und Bekanntmachung des Hinweises auf die Patenterteilung: **25.11.2020**
(21) Anmeldenummer: 19194526.0
(22) Anmeldetag: 30.08.2019
(51) Int. Cl.: B60H 1/00, F16C 11/04, F16D 1/108, F16C 25/04

(54) **LAGERKOMPONENTE UND LAGERANORDNUNG MIT EINER LAGERKOMPONENTE INSBESONDERE FÜR EINE SCHLIESSKLAPPE EINES LUFTAUSSTRÖMERS**
BEARING COMPONENT AND BEARING ARRANGEMENT COMPRISING A BEARING COMPONENT IN PARTICULAR FOR A DAMPER DOOR OF A VENTILATING DEVICE
COMPOSANT PALIER ET DISPOSITIF PALIER DOTÉ D'UN COMPOSANT PALIER NOTAMMENT POUR UN CLAPET D'OBTURATION D'UN AÉRATEUR

(30) Priorität: 04.09.2018 DE 102018121470
(43) Veröffentlichungstag der Anmeldung: 25.03.2020
(73) Patentinhaber: Dr. Schneider Kunststoffwerke GmbH, 96317 Kronach-Neuses (DE)
(72) Erfinder: Kamm, Daniel, 96264 Altenkunstadt (DE)

(56) Entgegenhaltungen:
- EP-A1- 0 525 341
- EP-A1- 0 644 073
- DE-A1- 3 818 565
- DE-A1- 4 020 672
- DE-A1- 10 318 274
- DE-A1-102013 202 726
- FR-A1- 2 773 595
- US-A- 4 208 075

## Beschreibung

Es werden eine Lagerkomponente und eine Lageranordnung mit einer Lagerkomponente beschrieben, die zur drehbaren Lagerung in einem Gehäuse aufgenommen werden können.

Die Lagerkomponente kann bspw. als Hebel zur Übertragung einer Schwenkbewegung von einer Bedieneinrichtung an eine verschwenkbar gelagerte Klappe, z.B. Schließ- oder Drosselklappe eines Luftausströmers, eingesetzt werden. Die Lageranordnung kann als erste Lagerkomponente einen Hebel und als zweite Lagerkomponente eine Schließ- oder Drosselklappe aufweisen, die miteinander verbunden und drehbar in einem Luftausströmergehäuse gelagert sind. Die Schließ- oder Drosselklappe dient zur Regelung der Menge an zugeführter Luft, so dass sich die Menge an ausströmender Luft verändern lässt.

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Luftausströmer können bspw. in einem Fahrzeugarmaturenbrett oder im Bereich der A-, B- oder C- Säule oder am Dach eines Kraftfahrzeuges angeordnet sein.

### Stand der Technik

Schließklappen werden in bekannten Ausführungen an gegenüberliegenden Seitenwänden oder an einer Seitenwand des Gehäuses eines Luftausströmers drehbar gelagert. Die Schließklappe ist dann mit einem Hebel verbunden, der in einer entsprechenden Aufnahmeöffnungen der Schließklappe aufgenommen ist. Die Fertigungstoleranzen für das Gehäuse, die Schließklappe und den Hebel führen dazu, dass die Schließklappe mit Spiel gelagert ist. Dies führt zu einer Geräuschentwicklung ("Klappern") wenn die Schließklappe mit einem Spiel gelagert ist. Im Fall von Überschneidungen kommt es zu einem Blockieren der Schließklappe. Die Bestandteile Schließklappe und Hebel bestehen in der Regel aus Kunststoff und werden in einem Spritzgussprozess hergestellt

Aus dem Stand der Technik ist es zur Lösung dieser Probleme bekannt, enge Toleranzen vorzugeben. Dies erfordert häufige Werkzeugänderungen der Spritzgusswerkzeuge, um die Bauteile (Schließklappe, Hebel) innerhalb der vorgegebenen Toleranzen fertigen zu können.

In der Regel werden im Stand der Technik Schließklappen über die gesamte Gehäusebreite eines Luftausströmergehäuses zwischen zwei gegenüberliegenden Seitenwänden gelagert. Um ein Blockieren und ein Spiel der Schließklappe zu verhindern, sind hierfür sehr enge Fertigungstoleranzen einzuhalten und häufige Werkzeugänderungen erforderlich.

Diese Maßnahmen sind jedoch sehr kosten- und zeitintensiv.

CN 206 870 823 U zeigt ein Adapterstück zum Aufstecken auf eine Drehachse einer Drosselklappe, um damit eine Drehwinkelbegrenzung und/oder einen mechanischen Anschlag für einen Antriebs- bzw. Stellmotor bereitszustellen.

DE 10 2017 113 387 A1 offenbart einen Luftausströmer mit einem in dessen Gehäuse drehbar gelagerten Absperrelements für die Regulierung des Luftstroms. Konzentrisch auf der Drehachse des Absperrelements ist ein Übertragungselement in Form eines Zahnradsegments befestigt, welches von einem beweglich gelagerten Lamellenträger betätigbar ist und wiederum das Absperrelement bewegt.

In CN 106 274 377 A und DE 10 2013 102 866 B3 sind kompakte Bedieneinrichtungen für Luftausströmer beschrieben, welche der Ausrichtung und Regulierung des austretenden Luftstroms dienen.

DE 201 18 274 U1 offenbart eine Luftdüse mit über einen Mitnehmer verbundenen Lamellen. Zwischen Mitnehmer und Lamelle wird über ein Reibgehemme ein Reibmoment erzeugt, das konstante Bedienkräfte erzeugt.

Die EP 0 644 073 A1 zeigt eine Klappenanordnung zur synchronen Ansteuerung zweier Luftklappen über eine gemeinsame Antriebsstange. Die Enden der Stange werden in entsprechende Aufnahmen der Klappen eingesetzt und weisen elastisch federnde Verbindungselemente auf. Durch radiale Verformung der Verbindungselemente können die Bauteile zur Drehmomentübertragung miteinander verbunden werden.

EP 0 525 341 A1 zeigt Klappen mit einerseits angeformtem Gestänge zur Verbindung mit einer weiteren Klappe und andererseites hohlem Lagerzapfen zur Aufnahme eines Betätigungshebels. Die Verbindung der Bauteile erfolgt über Rastmittel, welche den Betätigungshebel innerhalb der Klappe verriegeln. Gestänge und Lagerzapfen dienen zudem der Lagerung der Klappe in einem Gehäuse, welches einen Strömungskanal bildet.

### Aufgabe

Es besteht die Aufgabe darin eine toleranzausgleichende spielfreie Ausrichtung und Lagerung einer drehbar gelagerten Lagerkomponente, wie beispielsweise einer Schließklappe, anzugeben, wobei innerhalb zulässiger Fertigungstoleranzen die Funktion der Lagerkomponente zu jeder Zeit spielfrei gewährleistet ist, ein Blockieren verhindert wird und keine häufigen Werkzeugänderungen erforderlich sind.

### Lösung

Die vorstehend genannte Aufgabe wird durch eine Lageranordnung, aufweisend eine erste Lagerkomponente und eine zweite Lagerkomponente gelöst:
Die erste Lagerkomponente besteht aus einem ersten Abschnitt und einem zweiten Abschnitt, die entlang einer Mittelachse übereinander und im Wesentlichen konzentrisch zur Mittelachse angeordnet sind, wobei
- der erste Abschnitt einen sich parallel zur Mittelachse erstreckenden Haken aufweist,
- der zweite Abschnitt einen ersten Arm und einen zweiten Arm aufweist,
- der erste Arm und der zweite Arm federnd am zweiten Abschnitt angeordnet sind, und
- der erste Arm und/oder der zweite Arm einen sich orthogonal zur Hauptrichtung des Arms erstreckenden Haken aufweisen.

Die zweite Lagerkomponente ist gemeinsam mit der ersten Lagerkomponente um eine Drehachse, welche konzentrisch zur Mittelachse der ersten Lagerkomponente verläuft, drehbar in einem Gehäuse gelagert, wobei
- die zweite Lagerkomponente eine Aufnahme für den ersten Abschnitt der ersten Lagerkomponente aufweist, die sich im Wesentlichen entlang und konzentrisch zur Drehachse erstreckt,
- der erste Abschnitt der ersten Lagerkomponente in der Aufnahme der zweiten Lagerkomponente aufgenommen ist,
- der Haken des ersten Abschnitts der ersten Lagerkomponente in eine Öffnung der Aufnahme eingreift,
- der erste Arm des zweiten Abschnitts der ersten Lagerkomponente sich an der zweiten Lagerkomponente abstützt, und
- der zweite Arm des zweiten Abschnitts der ersten Lagerkomponente sich an einer Gehäusewand abstützt.

Die erste Lagerkomponente wird in die zweite Lagerkomponente, wie beispielsweise eine Schließklappe, in die entsprechende Aufnahme eingesetzt und über den Haken verrastet. Die erste Lagerkomponente stützt sich über den ersten Arm an der zweiten Lagerkomponente, zum Beispiel Schließklappe, ab und bewirkt hierdurch einen Toleranzausgleich und ermöglicht eine spielfreie Ausrichtung der zweiten Lagerkomponente zu der ersten Lagerkomponente.

Der zweite Arm stützt sich zusätzlich an einer Gehäusewand ab und dient ebenfalls zur toleranzausgleichenden spielfreien Ausrichtung der beiden Lagerkomponenten, die beispielsweise drehbar innerhalb einer Öffnung eines Gehäuses gelagert sind. Die beiden Komponenten, erste Lagerkomponente und zweite Lagerkomponente, sind über den ersten Arm, der gefedert am zweiten Abschnitt angeordnet ist, spielfrei zueinander ausgerichtet. Dabei können Fertigungstoleranzen zueinander ausgeglichen werden. Der Haken kann in einer Aufnahme der zweiten Lagerkomponente aufgenommen sein und in eine Öffnung eingreifen. Der erste gefedert gelagerte Arm drückt gegen einen Abschnitt der zweiten Lagerkomponente, sodass der Haken stets unter Spannung in der Aufnahme der zweiten Lagerkomponente gehalten ist. Dadurch wird ein Toleranzausgleich bereitgestellt. Zusätzlich stützt sich die erste Lagerkomponente über den zweiten Arm, der ebenfalls gefedert am zweiten Abschnitt angeordnet ist, an einer Gehäusewand ab und stellt hierdurch einen zusätzlichen Toleranzausgleich bereit. Die zweite Lagerkomponente, zum Beispiel Schließklappe, kann daher ohne Spiel über die erste Lagerkomponente in einem Gehäuse drehbar gelagert werden. Hierdurch sind häufige Werkzeugänderungen zur Abstimmung der Bauteile unnötig. Die einzuhaltenden Fertigungstoleranzen können deutlich breiter ausgelegt werden, als bisher erforderlich. Hierdurch wird ein Spiel der zusammengebauten Baugruppe verhindert und ein Blockieren einer zweiten Lagerkomponente (Schließklappe) verhindert.

Der erste Arm kann sich tangential zum zweiten Abschnitt erstrecken und der zweite Arm kann radial vom zweiten Abschnitt abstehen. Die Ausführung ermöglicht das Abstützen der ersten Lagerkomponente (z.B. Hebel) über den ersten Arm in einem Verbindungsbereich zu einer zweiten Lagerkomponente (z.B. Schließklappe), so dass keine Elemente nach außen ragen und die spielfreie Lagerung beeinträchtigen. Der zweite Arm steht vom Verbindungsbereich ab und kann sich so beispielsweise an der Gehäusewand abstützen.

Am zweiten Abschnitt kann auf der dem ersten Abschnitt gegenüberliegenden Seite ein radial abstehender Hebelarm oder ein Zahnrad angeordnet sein, der bzw. das eine Schnittstelle zur Kopplung mit einem Übertragungselement aufweist. Die erste Lagerkomponente kann beispielsweise ein Hebel sein, der in eine Aufnahmeöffnung einer Schließklappe einsetzbar und über den Haken im ersten Abschnitt verrastbar ist. Über den abstehenden Hebelarm kann eine Übertragung der Bedienbewegung über ein Bedienrad mittels einer Koppelstange auf die Schließklappe übertragen werden. Die Schnittstelle dient zur Aufnahme einer Lagerkugel der Koppelstangen oder weist selbst eine Lagerkugel auf, die in einer entsprechenden Aufnahmeöffnung einer Koppelstange aufgenommen ist. Über die Koppelstange wird die Drehbewegung eines Bedienrads auf den Hebel übertragen. Die erste Lagerkomponente kann aber auch ein Zahnrad aufweisen, das über ein weiteres Zahnrad, eine Zahnstange oder einen Zahnriemen mit weiteren Einrichtungen gekoppelt ist.

Der erste Arm und/oder der zweite Arm weisen einen sich orthogonal zur Hauptrichtung des Arms erstreckenden Haken auf. Der Haken erstreckt sich ausgehend von den gefedert ausgebildeten Armen und drückt gegen die Oberfläche einer Gehäusewand oder gegen einen Rand einer zweiten Lagerkomponente.

Im Übergang vom ersten Abschnitt kann mindestens eine sich radial zur Mittelachse erstreckende Wand angeordnet sein. Die mindestens eine Wand dient zur Ausrichtung des Hebels innerhalb der Aufnahme der Schließklappe bzw. der zweiten Lagerkomponente. Vorzugsweise sind zwei Wände vorgesehen, die beabstandet zueinander angeordnet sind und eine unterschiedliche Höhe und/oder Breite aufweisen. Die zweite Lagerkomponente kann hierzu Öffnungen aufweisen, die unterschiedliche Aufnahmetiefen und -weiten aufweisen, sodass jeweils nur die entsprechende Wand in diesen Öffnungen aufgenommen werden kann. Hierüber kann ein fehlerfreier Zusammenbau einer ersten Lagerkomponente und einer zweiten Lagerkomponente sichergestellt werden.

Der erste Abschnitt kann mindestens eine sich längs der Mittelachse erstreckende erste Klemmleiste aufweisen. Die Klemmleiste dient zur Verbreiterung des Querschnitts des ersten Abschnitts der Lagerkomponente, sodass der erste Abschnitt und damit die Lagerkomponente mit einer größeren Klemmwirkung innerhalb der Aufnahme einer zweiten Lagerkomponente aufgenommen werden können. Die mindestens eine Klemmleiste kann hierzu einen abnehmenden Abstand zum ersten Abschnitt ausgehend vom zweiten Abschnitt aufweisen. Die Klemmleiste kann in weiteren Ausführungen den Haken des ersten Abschnitts gegenüberliegen und dadurch den Druck auf den Haken beim Einbringen und im eingesetzten Zustand erhöhen. Die Verbindung zwischen erster Lagerkomponente und zweiter Lagerkomponente wird dadurch unterstützt.

Der erste Abschnitt und der zweite Abschnitt können im Wesentlichen zylinderförmig oder kegelstumpfförmig ausgebildet sein.

Die Lageranordnung umfasst das Gehäuse sowie die erste Lagerkomponente und die zweite Lagerkomponente. Die erste Lagerkomponente kann beispielsweise ein Hebel und die zweite Lagerkomponente eine Schließklappe sein. Der erste Abschnitt des Hebels ist in der Aufnahme der Schließklappe aufgenommen und über den Haken, der in eine Öffnung der Aufnahme eingreift, arretiert. Der erste Arm, der gefedert am zweiten Abschnitt gelagert ist, stützt sich an einem Rand der Schließklappe ab, sodass ein Toleranzausgleich erreicht wird. Der zweite Arm, der ebenfalls gefedert am zweiten Abschnitt angeordnet ist, stützt sich gegenüber der Gehäusewand ab, sodass auch hier ein Toleranzausgleich bereitgestellt wird und die gesamte Anordnung, bestehend aus Schließklappe und Hebel, spielfrei im Gehäuse gelagert ist.

Die Ausbildung der ersten Lagerkomponente (Hebel) ermöglicht die Fertigung von Hebeln und Schließklappen mit größeren Toleranzen, da der Hebel sowohl die Fertigungstoleranzen der zweiten Lagerkomponente (Schließklappe) als auch die Fertigungstoleranzen für sich selbst ausgleicht. Dies erfolgt über die beiden Arme, die gefedert am zweiten Abschnitt angeordnet sind.

Vorteilhafterweise kann daher die Fertigung der Bauteile schneller und damit kosteneffizienter durchführt werden. Zudem entfallen häufige Werkzeugänderungen, was ebenfalls zu Zeit- und Kosteneinsparungen führt.

Die Gehäusewand kann eine Öffnung aufweisen, über welche die erste Lagerkomponente und die zweite Lagerkomponente drehbar im Gehäuse gelagert sind, wobei die Öffnung radial nach innen gerichtete Vorsprünge aufweist. Die radial nach innen gerichteten Vorsprünge dienen zur Ausrichtung und Zentrierung des Lagerabschnitts der zweiten Lagerkomponente, der innerhalb der Öffnung drehbar gelagert ist.

Die zweite Lagerkomponente kann hierzu einen ringförmigen Lagerabschnitt aufweisen, der in der Öffnung der Gehäusewand aufgenommen ist, wobei der ringförmige Lagerabschnitt eine umlaufende Lagerfläche aufweist. Die Lagerfläche kann zylindrisch oder kegelstumpfartig ausgeführt sein.

Eine kegelstumpfartig ausgebildete Lagerfläche bildet eine Schräge aus, sodass im Zusammenspiel mit den nach innen gerichteten Vorsprüngen eine Zentrierung der Schließklappe und damit des Verbunds bestehend aus Schließklappe und Hebel erreicht werden kann.

Der ringförmige Lagerabschnitt kann mindestens einen Einschnitt aufweisen, in dem eine sich radial zur Drehachse vom Übergang zwischen dem ersten Abschnitt und dem zweiten Abschnitt der ersten Lagerkomponente erstreckende Wand aufgenommen ist. Der mindestens eine Einschnitt bildet eine vorstehend bereits beschriebene Öffnung im Rand der Schließklappe, die zur fehlerfreien Montage und Befestigung der ersten Lagerkomponente in der Aufnahme der zweiten Lagerkomponente vorgesehen ist. Vorzugsweise sind zwei solche Einschnitte vorgesehen, die unterschiedliche Einschubtiefen und/oder -weiten aufweisen, sodass korrespondierend ausgebildete Wände mit unterschiedlichen Höhen und Breite jeweils nur in den zugehörigen Eischnitt eingesetzt werden können. Dies verhindert, dass ein Einsetzen des Hebels unter einer falschen Ausrichtung erfolgt, wobei der Haken innerhalb der Aufnahme der Schließklappe zu einer Klemmwirkung und damit Blockierung führt. Dies könnte den Anschein einer ordnungsgemäßen Verrastung erwecken, wobei die Ausrichtung fehlerhaft ist. Die exakte Ausrichtung ist erforderlich, damit der vom zweiten Abschnitt radial abstehende Hebelarm die erforderliche Ausrichtung zur Schließklappenfläche und damit für die Bedienfunktion und Schwenkstellungen aufweist.

Einer der Einschnitte mit einer korrespondierenden Wand kann zur Übertragung des Drehmoments von der ersten Lagerkomponente auf die zweite Lagerkomponente dienen.

Die Aufnahme der zweiten Lagerkomponente kann mindestens eine zweite Klemmleiste aufweisen, die sich längs zur Drehachse erstreckt und welche die Aufnahme nach innen hin verkleinert. Die mindestens eine zweite Klemmleiste kann als Gegenspieler zur mindestens einen ersten Klemmleiste der ersten Lagerkomponente dienen. Die mindestens eine zweite Klemmleiste kann aber auch alternativ zur ersten Klemmleiste vorgesehen sein und den ersten Abschnitt der ersten Lagerkomponente unter einer zunehmenden Klemmwirkung innerhalb der Aufnahme halten. Die mindestens eine erste Klemmleiste verkleinert hierzu ausgehend von einer Öffnung den Aufnahmeraum der Aufnahme abseits der Öffnung zunehmend.

Die Komponenten der Lageranordnung (erste Lagerkomponente, zweite Lagerkomponente, Gehäuse) können in einem Spritzgussverfahren hergestellt werden und sind daher kostengünstig und schnell produzierbar. Die zweite Lagerkomponente, die als Hebel ausgebildet sein kann, kann über eine Koppelstange mit einem Bedienrad eines Luftausströmers zur Regulierung der Schließklappenstellung verbunden sein. Ein Verdrehen des Bedienrads bewirkt eine Verlagerung der Koppelstange, die über die Schnittstelle am Hebel mit der Schließklappe gekoppelt ist. Hierüber wird die Drehbewegung des Bedienrads auf den Hebel übertragen, der ein entsprechendes Verschwenken der Schließklappe bewirkt.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Seitenansicht eines Hebels;
- Fig. 2: eine weitere schematische Seitenansicht des Hebels von Fig. 1;
- Fig. 3: eine erste perspektivische Darstellung des Hebels von Fig. 1;
- Fig. 4: eine weitere perspektivische Darstellung des Hebels von Fig. 1;
- Fig. 5: eine noch weitere perspektivische Darstellung des Hebels von Fig. 1;
- Fig. 6: eine schematische Darstellung einer Schließklappe;
- Fig. 7: eine perspektivische Darstellung eines Ausschnitts der Schließklappe von Fig. 6;
- Fig. 8: eine perspektivische Darstellung einer Baugruppe, bestehend aus einem Hebel, einer Schließklappe und einem Gehäuse;
- Fig. 9: eine schematische Seitenansicht auf die Baugruppe; und
- Fig. 10: eine schematische Schnittansicht durch die Baugruppe von Fig. 8.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

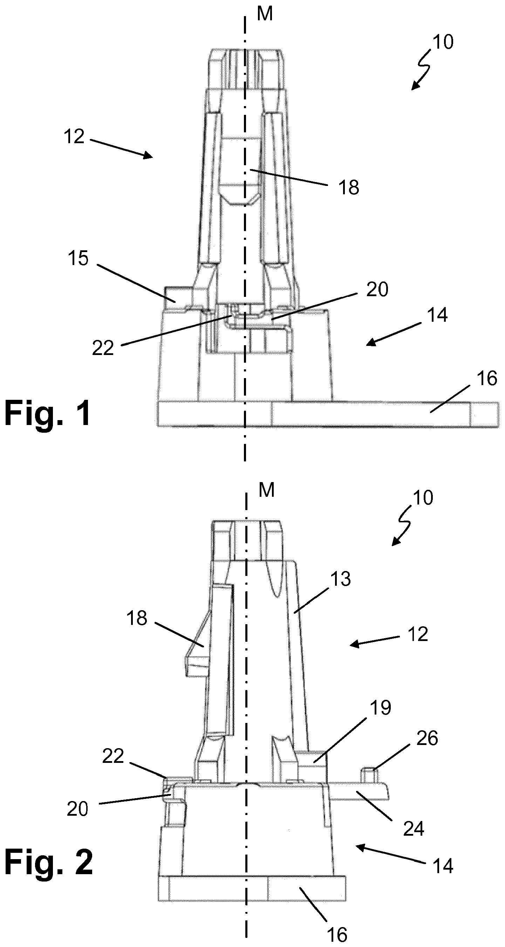

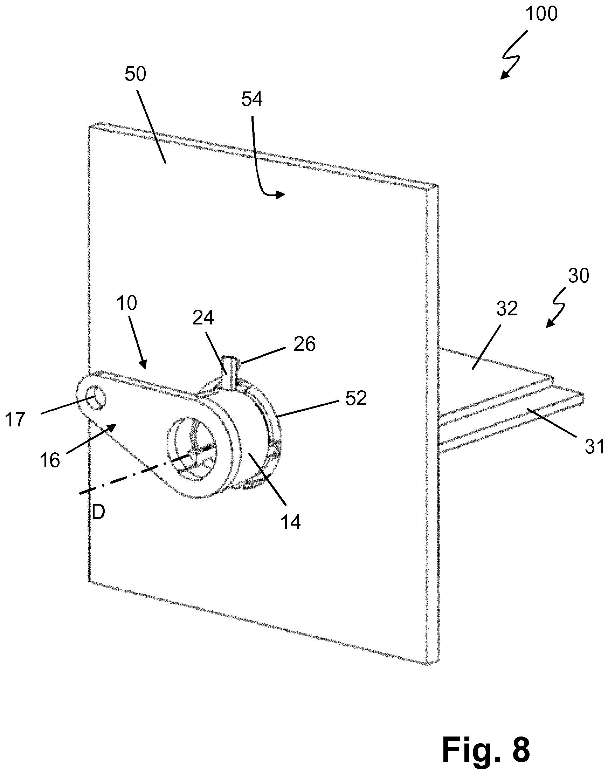

Fig. 1 zeigt eine schematische Darstellung einer ersten Lagerkomponente, die als Hebel 10 ausgebildet ist. Der Hebel 10 dient zur Übertragung einer Bedienbewegung auf eine Schließklappe 30 (zweite Lagerkomponente). Der Hebel 10 und die Schließklappe 30 sind Bestandteil eines Luftausströmers in einem Kraftfahrzeug. Der Luftausströmer weist weiterhin ein Gehäuse mit der in den Fig. 8 - 10 gezeigten Gehäusewand 50, Luftleitelemente zum Ablenken von Luft und ein Bedienrad auf, welches zur Regulierung der Stellung der Schließklappe 30 und damit zur Menge der zugeführten und ausströmenden Luft vorgesehen ist. Das Bedienrad ist über eine nicht dargestellte Koppelstange mit dem Hebel 10 gekoppelt. Ein Verdrehen des Bedienrads führt daher zu einer Verlagerung der Koppelstange und entsprechend zu einer Verlagerung eines Hebelarms 16 des Hebels 10. Der Hebel 10 ist gemeinsam mit der Schließklappe 30 drehbar um eine Drehachse D in einer Öffnung 52 einer Gehäusewand 50 gelagert, sodass eine Verlagerung des Hebelarms 16 zu einem Verschwenken der Schließklappe 30 um die Drehachse D führt.

Der Hebel 10 weist eine Mittelachse M auf, entlang der sich ein erster Abschnitt 12 und ein zweiter Abschnitt 14 erstrecken. Der erste Abschnitt 12 und der zweite Abschnitt 14 sind im Wesentlichen als Kegelstumpf ausgebildet. Der erste Abschnitt 12 weist entlang der Mittelachse M einen Haken 18 auf. Der Haken 18 ist in Einschubrichtung mit einer Schräge ausgebildet und weist auf der gegenüberliegenden Seite eine flache Seite auf. Über den Haken 18 kann der erste Abschnitt 12 innerhalb einer Aufnahme 34 der Schließklappe 30 verrastet werden. Der zweite Abschnitt 14 weist einen ersten gefedert gelagerten Arm 20 und einen zweiten gefedert gelagerten Arm 24 auf, an dessen Enden jeweils Haken 22 und 26 vorgesehen sind, die sich orthogonal zur Längsachse der Arme 20 und 24 erstrecken.

Im Übergang vom zweiten Abschnitt 14 zum ersten Abschnitt 12 sind zwei Wände 15 und 19 vorgesehen, die sich radial von der Mittelachse M aus erstrecken und eine unterschiedliche Höhe und Breite aufweisen. Die Wände 15 und 19 dienen zur fehlerfreien Ausrichtung und Befestigung des Hebels 20 in der Aufnahme 34 der Schließklappe 30 und zur Übertragung des Drehmoments zwischen Hebel 10 und Schließklappe 30. Die Wand 19 dient in erster Linie zur Drehmomentübertragung und die Wand 15 zur Vermeidung des Falschverbaus.

Fig. 2 zeigt eine weitere schematische Darstellung des Hebels 10. Der Haken 18 erstreckt sich an einer flach ausgebildeten Seite des ersten Abschnitts 12. Auf dieser Seite ist der erste Abschnitt 12 nicht kegelstumpfartig ausgebildet. Auf der gegenüberliegenden Seite weist der erste Abschnitt 12 eine Leiste 13 auf. Die Leiste 13 ist dazu vorgesehen, um einen Überlastschutz bereitzustellen, damit es zu keiner Beschädigung des Hebels 10 oder einem Ausrasten kommen kann.

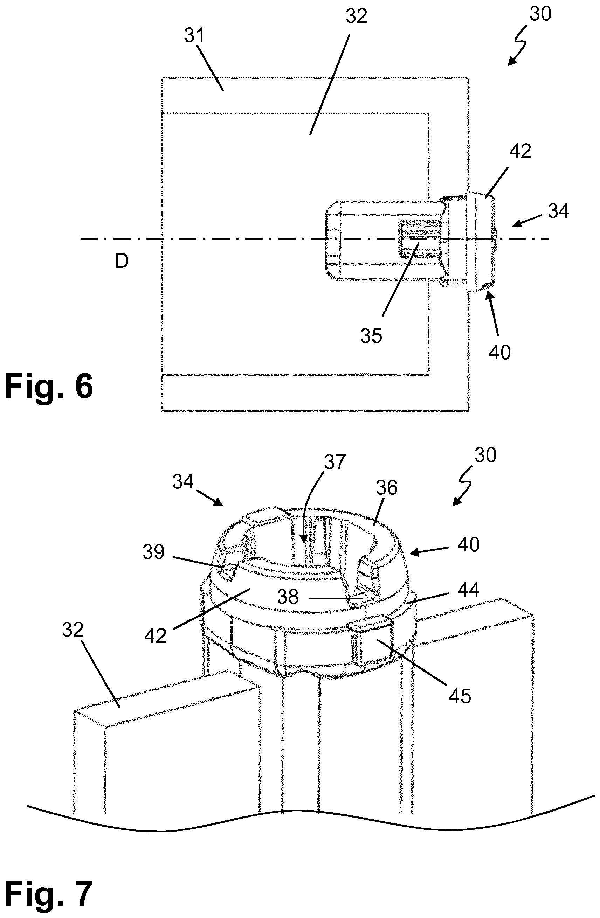

Der Hebel 10 steht über jeweils zwei sich gegenüberliegende Quetschrippen in der Aufnahme 34 (siehe Fig. 7) in Kontakt mit der Schließklappe 30, die mit entsprechenden Gegenflächen am ersten Abschnitt 12 des Hebels 10 auf eine sehr kurze Länge (ca. 1 mm) eine Überschneidung aufweisen (0,05 mm pro Seite). Die in Kontakt stehenden Flächen sind sowohl am Hebel 10 wie auch in der Aufnahme 34 (Öffnung 37) der Schließklappe 30 plan und zueinander parallel.

In Fig. 2 ist erstmals der zweite Arm 24 gezeigt, der sich radial von der Mittelachse M vom zweiten Abschnitt 14 aus erstreckt. Der Haken 26 ist so ausgerichtet, dass dieser im eingesetzten Zustand des Hebels 10 in die Aufnahme 34 an einer Gehäusewand 50 an deren Außenfläche 54 anliegt. Die gefederte Ausführung des Arms 24 ermöglicht dabei einen Toleranzausgleich.

Demgegenüber bewirkt der tangential zur Mittelachse M am zweiten Abschnitt angeordnete erste Arm 20 mit dem Haken 22 einen Toleranzausgleich zwischen dem Hebel 10 und der Schließklappe 30. Der Haken 22 stützt sich hierzu an einem Rand 36 am oberen Ende der Aufnahme 34 (siehe Fig. 7) ab. Der erste Arm 20 stellt damit einen Toleranzausgleich zwischen dem Hebel 10 und der Schließklappe 30 bereit.

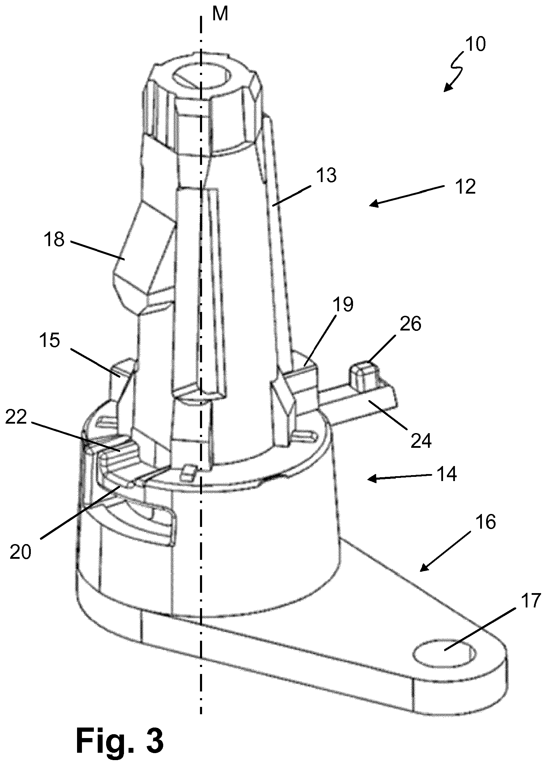

Fig. 3 zeigt eine erste perspektivische Darstellung des Hebels 10. Darin sind die beiden Wände 15 und 19 gezeigt. Diese weisen eine unterschiedliche Höhe auf. Die Wände 15 können daher nur in entsprechenden Öffnungen 38, 39 (siehe Fig. 7) der Schließklappe 30 eingesetzt werden. Zusätzlich weisen die Wände 15, 16 eine zueinander unterschiedliche Wandstärke auf. Die Öffnungen 38 und 39 weisen eine unterschiedliche Weite auf, sodass der Hebel 10 nur in einer Ausrichtung relativ zur Schließklappe 30 in die Aufnahme 34 eingesetzt werden kann. Die Position des Hebelarms 16 entspricht daher einer definierten Stellung der Schließklappe 30. Zusätzlich dienen die Wände 15 und 19 zur Übertragung des Drehmomentes zwischen dem Hebel 10 und der Schließklappe 30.

Für die gefederte Lagerung des ersten Arms 20 weist der zweite Abschnitt 14 einen Freiraum auf, der eine Verlagerung des ersten Arms 20 nach unten (siehe beispielsweise Fig. 1) zulässt.

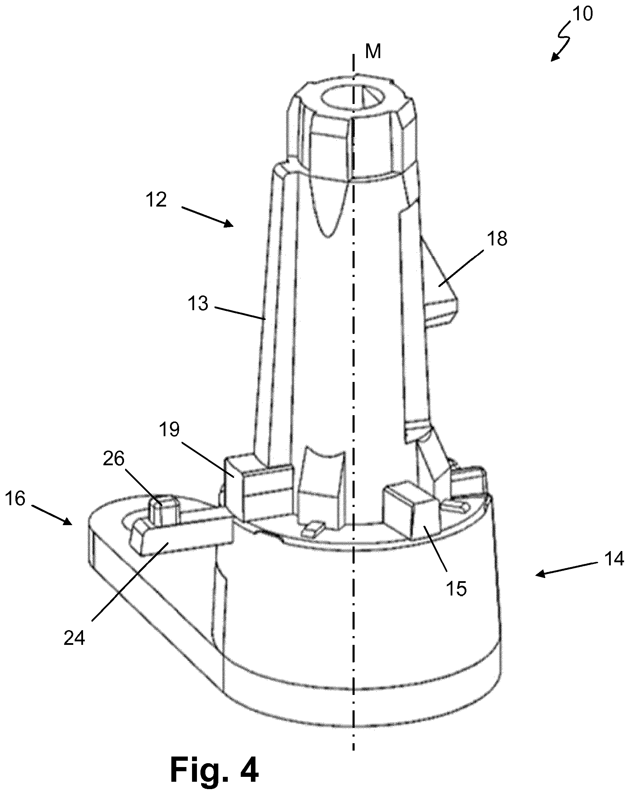

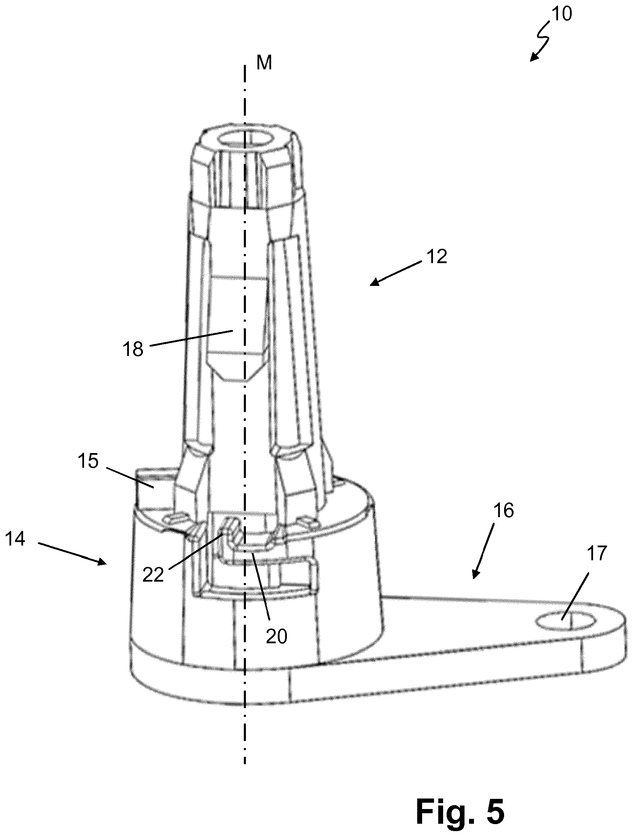

Die Fig. 4 und 5 zeigen weitere perspektivische Darstellungen des Hebels 10. Die Mittelachse M stellt auch die Drehachse D für den Hebel 10 dar. Nachdem der erste Abschnitt 12 in der Aufnahme 34 aufgenommen ist, können der Hebel 10 und die Schließklappe 30 um die Drehachse D innerhalb der Öffnung 52 in der Gehäusewand 50 verdreht werden. Der Zusammenbau erfolgt derart, dass zuerst die Schließklappe 30 in das Gehäuse eingebracht wird und anschließend von außen der Hebel 10 in die Aufnahme 34 eingebracht wird. Dabei stützt sich die Schließklappe 30 über einen an einer Auflage 44 angeordneten Vorsprung 45 an der Innenfläche 56 der Gehäusewand 50 und der Hebel 10 über den Haken 22 an der Außenfläche 54 der Gehäusewand 50 ab.

Fig. 6 zeigt eine schematische Darstellung der Schließklappe 30. Die Schließklappe 30 weist eine Wand 32 aus einem harten Kunststoff und eine Weichkomponente 31 auf. Die Weichkomponente 31 umgibt die Wand 32. In Fig. 6 ist nur ein Ausschnitt der Schließklappe 30 dargestellt. Die Weichkomponente 31 umgibt regulär die Platte 32 umlaufend. Die Schließklappe 30 kann in einem 2-K-Verfahren mittels Spritzgießen hergestellt werden. Hierzu wird zuerst die Platte 32 mit einem ersten Kunststoff gefertigt und anschließend ein zweiter Kunststoff in die Werkzeugform eingebracht, der die Weichkomponente 31 ausbildet.

Die Schließklappe 30 weist die Aufnahme 34 auf, die konzentrisch zur Drehachse D angeordnet ist. Die Aufnahme 34 weist eine Öffnung 35 auf. Die Öffnung erstreckt sich parallel zur Drehachse D und dient zur Aufnahme des Hakens 18 des ersten Abschnitts 12. Über einen Lagerabschnitt 40 ist die Schließklappe 30 in der Öffnung 52 der Gehäusewand 50 gelagert. Der Lagerabschnitt 40 ist kegelstumpfartig ausgebildet. Der Lagerabschnitt 40 weist eine Lagerfläche 42 mit einem schräg ausgebildeten, umlaufenden Lagerabschnitt und einem zylinderförmigen, umlaufenden Lagerabschnitt auf. Die Lagerfläche 42 steht mit Vorsprüngen in der Öffnung 52 in Kontakt. Die Öffnung 52 weist hierzu nach innen ragende Vorsprünge auf. Die Vorsprünge (in der Figur nicht gezeigt) befinden sich an einer die Öffnung 52 umgebenden Wand. Über die Vorsprünge wird die Schließklappe 30 zentriert gelagert. In der Öffnung 52 der Gehäusewand 50 sind vier Vorsprünge vorgesehen. Mit diesen Vorsprüngen, die plane, zueinander parallele Anlageflächen besitzen, wird eine Formtolerierung unnötig, sowie eine einfache Messung mittels Messschieber ermöglicht. Der Einfluss einer Entformschräge auf die Eindeutigkeit der Bemaßung, sowie die Unsicherheit bei der Vermessung, entfallen. Um die Flächen ohne Entformschräge herzustellen, werden diese sehr klein ausgeführt.

Fig. 7 zeigt eine perspektivische Darstellung eines Teils der Schließklappe 30. Der Lagerabschnitt 40 weist an dem schrägen Lagerabschnitt der Lagerfläche 42 zwei Öffnungen 38 und 39 auf, die zur Aufnahme der Wände 15 und 19 ausgebildet sind. Die Öffnung 39 weist eine geringere Tiefe und eine geringere Weite auf und dient zur Aufnahme der Wand 15. Die Öffnung 38 weist eine größere Tiefe und eine größere Weite auf und dient zur Aufnahme der Wand 19.

Der schräge Lagerabschnitt schließt mit dem Rand 36 ab. Der Rand 36 dient als Anlagefläche für den Haken 22 des ersten gefederten Arms 20. Der Haken 22 stützt sich an dem in Fig. 7 gezeigten Vorsprung am Rand 36 ab und drückt den Hebel 20 aus der Aufnahme 34. Über die gerade Fläche des Hakens 18, der an einer entsprechenden Wand der Öffnung 35 anliegt, wird der erste Abschnitt 12 jedoch innerhalb der Aufnahme 34 gehalten. Die Vorspannung über den gefederten Arm 20 stellt hierüber einen Toleranzausgleich bereit.

Unterhalb des Lagerabschnitts 40 weist die Schließklappe 30 einen Abschnitt mit einem größeren Durchmesser auf, der eine Auflage 44 bereitstellt. Die Auflage 44 liegt der Innenfläche 56 der Gehäusewand 50 im montierten Zustand gegenüber. Der Vorsprung 45 stützt sich an der Innenfläche 56 ab und liegt im zusammengebauten Zustand dem Haken 26 im Wesentlichen gegenüber. Der Haken 26 befindet sich nicht direkt gegenüberliegend. Jedoch liegen sich der Vorsprung 45 und der Haken 26 in radialer Richtung gegenüber, sodass einem Druck über den Haken 26 durch den Vorsprung 45 entgegengewirkt wird. Dadurch wird verhindert, dass es zu einem Verkippen oder Blockieren kommt. Zudem lässt sich hierüber das Moment beim Verschwenken der Schließklappe einstellen.

Fig. 8 zeigt eine perspektivische Darstellung einer Baugruppe 100, bestehen aus den Komponenten Hebel 10, Schließklappe 30 und Gehäusewand 50. Die Gehäusewand 50 ist Teil eines Gehäuses eines Luftausströmers. Die Schließklappe 30 ist auch nur teilweise dargestellt. Daher kann die Schließklappe 30 am gegenüberliegenden Ende über eine zusätzliche Lagerstelle an einer gegenüberliegenden Gehäusewand drehbar gelagert sein. Das gegenüberliegende Lager kann als Loslager ausgebildet sein, da die Ausrichtung und toleranzausgleichende Lagerung über eine Seite erreicht wird, die mit dem Hebel 10 verbunden ist. Der Hebelarm 16 weist an dem dem Abschnitt 14 gegenüberliegenden Ende eine Öffnung 17 auf, die zur Aufnahme einer Lagerkugel oder eines Lagerzapfens der Koppelstange einer Bedieneinrichtung vorgesehen ist. Ein Verlagern der Koppelstange führt demgemäß zu einem Verschwenken des Hebelarms 10 und damit zu einer Rotation des Hebels 10 um die Drehachse D, die konzentrisch zur Mittelachse M verläuft. Dementsprechend wird nicht nur der Hebel 10 sondern auch die Schließklappe 30 in entsprechender Weise um die Drehachse D verdreht. Der Haken 26 des zweiten gefederten Arms 24 drückt gegen die Außenfläche der Wand 50, sodass ein Toleranzausgleich bereitgestellt wird und der Hebel 10 relativ zum Gehäuse spielfrei gelagert ist. Über den ersten Arm 20 und den Haken 22 ist der Hebel 10 zusätzlich mit der Schließklappe 30 so verbunden, dass ein Toleranzausgleich für die Verbindung zwischen Hebel 10 und Schließklappe 30 bereitgestellt wird.

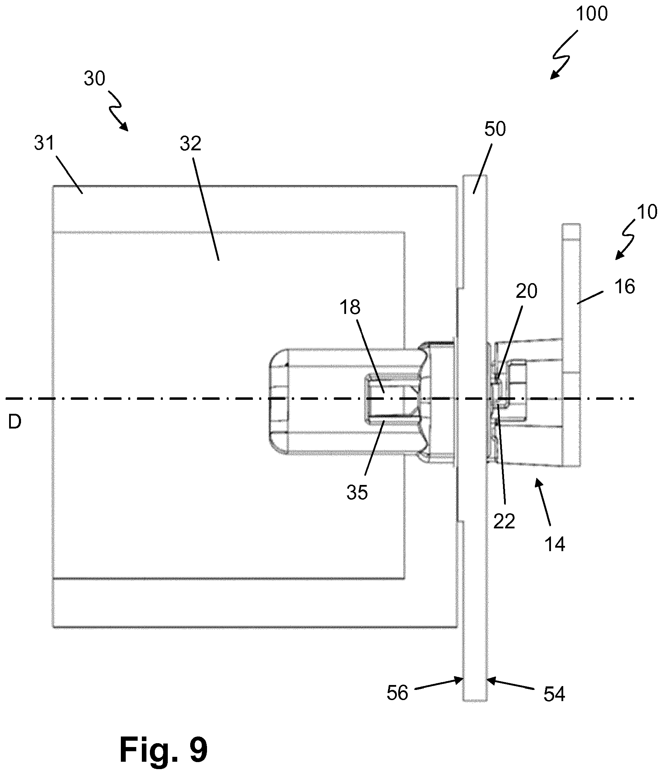

Fig. 9 zeigt eine schematische Seitenansicht auf die Baugruppe 100. Im zusammengebauten Zustand greift der Haken 18 in die Öffnung 35, wobei die flache Seite, die der Schräge gegenüberliegt, an einer korrespondierenden Wand der Öffnung 35 anliegt und gegen diese drückt. Der gefederte Arm 20 ist vorgespannt, wenn der Haken 18 in der Aufnahme 35 eingerastet ist. Die Vorspannung bewirkt, dass der gefederte Arm 20 bestrebt ist, den Hebel 10 aus der Aufnahme 34 herauszudrücken. Über den Haken 18 wird dies jedoch verhindert. Dadurch ist ein Toleranzausgleich geschaffen und der Hebel 10 ist spielfrei zur Schließklappe 30 gelagert. Zusätzlich stützt sich der Hebel 10 über den zweiten gefederten Arm 24 an der Außenfläche 54 der Gehäusewand 50 ab und bewirkt einen zusätzlichen Toleranzausgleich.

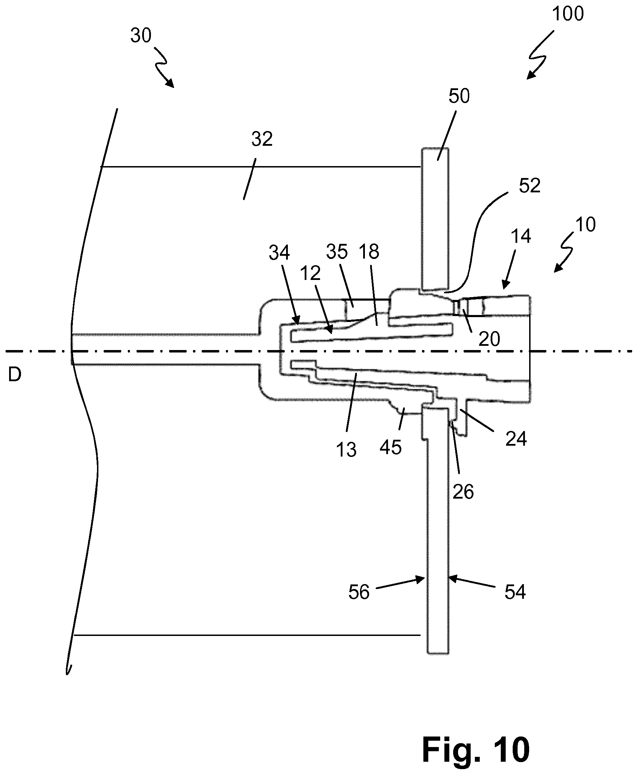

Fig. 10 zeigt eine schematische Schnittansicht der Baugruppe 100 und zeigt die gegenüberliegende Anordnung von Haken 26 und Vorsprung 45.

Die hierin beschriebene Baugruppe mit der Schließklappe 30 und dem Hebel 10 erlaubt die Fertigung innerhalb fertigungstechnisch einfach zu realisierender Toleranzen, sodass auf eine häufige Werkzeuganpassung verzichtet werden kann. Dementsprechend sinken die Kosten und Herstellzeiten für solche Komponenten und die Baugruppe 100. Im Weiteren wird ein Toleranzausgleich über die gefederten Arme 20 und 24 erreicht, sodass der Hebel 10 und die Schließklappe 30 spielfrei sowie der Hebel 10 und die Schließklappe 30 spielfrei zum Gehäuse gelagert sind.

### Bezugszeichenliste

- 10: Hebel
- 12: erster Abschnitt
- 13: Leiste
- 14: zweiter Abschnitt
- 15: Wand
- 16: Hebelarm
- 17: Öffnung
- 18: Haken
- 19: Wand
- 20: erster Arm
- 22: Haken
- 24: zweiter Arm
- 26: Haken
- 30: Schließklappe
- 31: Weichkomponente
- 32: Wand
- 34: Aufnahme
- 35: Öffnung
- 36: Rand
- 37: Öffnung
- 38: Öffnung
- 39: Öffnung
- 40: Lagerabschnitt
- 42: Lagerfläche
- 44: Auflage
- 45: Vorsprung
- 50: Gehäusewand
- 52: Öffnung
- 54: Außenfläche
- 56: Innenfläche
- 100: Baugruppe
- D: Drehachse
- M: Mittelachse

## Patentansprüche

1. Lageranordnung, aufweisend
a) eine erste Lagerkomponente mit einem ersten Abschnitt (12) und einem zweiten Abschnitt (14), die entlang einer Mittelachse (M) übereinander und im Wesentlichen konzentrisch zur Mittelachse (M) angeordnet sind, wobei
- der erste Abschnitt (12) einen sich parallel zur Mittelachse (M) erstreckenden Haken (18) aufweist,
- der zweite Abschnitt (14) einen ersten Arm (20) und einen zweiten Arm (24) aufweist,
- der erste Arm (20) und der zweite Arm (24) federnd am zweiten Abschnitt (14) angeordnet sind, und
- der erste Arm (20) und/oder der zweite Arm (24) einen sich orthogonal zur Hauptrichtung des Arms (20; 24) erstreckenden Haken (22; 26) aufweisen, und
b) eine zweite Lagerkomponente, die gemeinsam mit der ersten Lagerkomponente um eine Drehachse (D) drehbar in einem Gehäuse gelagert ist und die Drehachse (D) konzentrisch zur Mittelachse (M) der ersten Lagerkomponente verläuft, wobei
- die zweite Lagerkomponente eine Aufnahme (34) für den ersten Abschnitt (12) der ersten Lagerkomponente aufweist, die sich im Wesentlichen entlang und konzentrisch zur Drehachse (D) erstreckt,
- der erste Abschnitt (12) der ersten Lagerkomponente in der Aufnahme (34) der zweiten Lagerkomponente aufgenommen ist,
- der Haken (18) des ersten Abschnitts (12) der ersten Lagerkomponente in eine Öffnung (35) der Aufnahme (34) eingreift,
- der erste Arm (20) des zweiten Abschnitts (14) der ersten Lagerkomponente sich an der zweiten Lagerkomponente abstützt, und
- der zweite Arm (24) des zweiten Abschnitts (14) der ersten Lagerkomponente sich an einer Gehäusewand (50) abstützt.

2. Lageranordnung nach Anspruch 1, wobei an der ersten Lagerkomponente sich der erste Arm (20) tangential zum zweiten Abschnitt (14) erstreckt und der zweite Arm (24) radial vom zweiten Abschnitt (14) absteht.

3. Lageranordnung nach Anspruch 1 oder 2, wobei an der ersten Lagerkomponente am zweiten Abschnitt (14) auf der dem ersten Abschnitt (12) gegenüberliegenden Seite ein radial abstehender Hebelarm (16) oder ein Zahnrad angeordnet ist, der bzw. das eine Schnittstelle zur Kopplung mit einem Übertragungselement aufweist.

4. Lageranordnung nach Anspruch einem der Ansprüche 1 bis 3, wobei an der ersten Lagerkomponente im Übergang vom ersten Abschnitt (12) zum zweiten Abschnitt (14) mindestens eine sich radial zur Mittelachse (M) ersteckende Wand (15; 19) angeordnet ist.

5. Lageranordnung nach Anspruch 1, wobei die Gehäusewand (50) eine Öffnung (52) aufweist, über welche die erste Lagerkomponente und die zweite Lagerkomponente drehbar im Gehäuse gelagert sind, wobei die Öffnung (52) radial nach Innen gerichtete Vorsprünge aufweist.

6. Lageranordnung nach Anspruch 5, wobei die zweite Lagerkomponente einen ringförmigen Lagerabschnitt (40) aufweist, der in der Öffnung (52) der Gehäusewand (50) aufgenommen ist, wobei der ringförmige Lagerabschnitt (40) eine umlaufende Lagerfläche (42) aufweist.

7. Lageranordnung nach Anspruch 6, wobei der ringförmige Lagerabschnitt (40) mindestens einen Einschnitt aufweist, in dem eine sich radial zur Drehachse (D) vom Übergang zwischen dem ersten Abschnitt (12) und zweiten Abschnitt (14) der ersten Lagerkomponente erstreckende Wand (15; 19) aufgenommen ist.

8. Lageranordnung nach einem der Ansprüche 1 bis 7, wobei die Aufnahme (34) der zweiten Lagerkomponente mindestens eine zweite Klemmleiste aufweist, die sich längs zur Drehachse (D) erstreckt und die Aufnahme (34) nach Innen hin verkleinert.

## Claims

1. Bearing arrangement, comprising
a) a first bearing component with a first section (12) and a second section (14), which are arranged one above the other along a centre axis (M) and substantially concentrically with respect to the centre axis (M), wherein
- a first section (12) has a hook (18) extending parallel to the centre axis (M),
- the second section (14) has a first arm (20) and a second arm (24).
- the first arm (20) and the second arm (24) are resiliently arranged at the second section (14), and
- the first arm (20) and/or the second arm (24) has or have a hook (22; 26) extending orthogonally to the main direction of the arm (20; 24), and
b) a second bearing component, which together with the first bearing component is mounted in a housing to be rotatable about an axis (D) of rotation, the axis (D) of rotation extending concentrically with respect to the centre axis (M) of the first bearing component, wherein
- the second bearing component has a receptacle (34) for the first section (12) of the first bearing component, which receptacle extends substantially along and concentrically with respect to the axis (D) of rotation,
- the first section (12) of the first bearing component is received in the receptacle (34) of the second bearing component,
- the hook (18) of the first section (12) of the first bearing component engages in an opening (35) of the receptacle (34),
- the first arm (20) of the second section (14) of the first bearing component is supported on the second bearing component and
- the second arm (24) of the second section (14) of the first bearing component is supported on a housing wall (50).

2. Bearing arrangement according to claim 1, wherein at the first bearing component the first arm (20) extends tangentially with respect to the second section (14) and the second arm (24) protrudes radially from the second section (14).

3. Bearing arrangement according to claim 1 or 2, wherein at the first bearing component at the second section (14) on the side opposite the first section (12) a radially protruding lever arm (16) or a gearwheel is arranged, which comprises an interface for coupling with a transmission element.

4. Bearing arrangement according to any one of claims 1 to 3, wherein at least one wall (15; 19) extending radially with respect to the centre axis (M) is arranged at the first bearing component in the transition from the first section (12) to the second section (14).

5. Bearing arrangement according to claim 1, wherein the housing wall (50) has an opening (52), by way of which the first bearing component and the second bearing component are rotatably mounted in the housing, wherein the opening (52) has radially inwardly directed projections.

6. Bearing arrangement according to claim 5, wherein the second bearing component has an annular bearing section (40) received in the opening (52) of the housing wall (50), wherein the annular bearing section (40) has an encircling bearing surface (42).

7. Bearing arrangement according to claim 6, wherein the annular bearing section (40) has at least one incision in which a wall (15; 19), which extends radially with respect to the axis (D) of rotation from the transition between the first section (12) and the second section (14) of the first bearing component, is received.

8. Bearing arrangement according to any one of claims 1 to 7, wherein the receptacle (34) of the second bearing component has at least one clamping strip which extends longitudinally with respect to the axis (D) of rotation and reduces the receptacle (34) in inward direction.

## Revendications

1. Ensemble formant palier, présentant
a) un premier composant de palier avec une première section (12) et une deuxième section (14), qui sont disposées l'une au-dessus de l'autre le long d'un axe médian (M) et sensiblement de manière concentrique par rapport à l'axe médian (M), dans lequel
- la première section (12) présente un crochet (18) s'étendant de manière parallèle à l'axe médian (M),
- la deuxième section (14) présente un premier bras (20) et un deuxième bras (24),
- le premier bras (20) et le deuxième bras (24) sont disposés sur ressorts au niveau de la deuxième section (14), et
- le premier bras (20) et/ou le deuxième bras (24) présentent un crochet (22 ; 26) s'étendant de manière orthogonale par rapport à la direction principale du bras (20 ; 24), et
b) un deuxième composant de palier, qui est monté dans un boîtier de manière à pouvoir tourner conjointement avec le premier composant de palier autour d'un axe de rotation (D) et l'axe de rotation (D) s'étend de manière concentrique par rapport à l'axe médian (M) du premier composant de palier, dans lequel
- le deuxième composant de palier présente un logement (34) pour la première section (12) du premier composant de palier, qui s'étend sensiblement le long de l'axe de rotation (D) et de manière concentrique par rapport à celui-ci,
- la première section (12) du premier composant de palier est logée dans le logement (34) du deuxième composant de palier,
- le crochet (18) de la première section (12) du premier composant de palier vient en prise dans une ouverture (35) du logement (34),
- le premier bras (20) de la deuxième section (14) du premier composant de palier prend appui au niveau du deuxième composant de palier, et
- le deuxième bras (24) de la deuxième section (14) du premier composant de palier prend appui au niveau d'une paroi de boîtier (50).

2. Ensemble formant palier selon la revendication 1, dans lequel le premier bras (20) s'étend de manière tangentielle par rapport à la deuxième section (14) et le deuxième bras (24) dépasse de manière radiale de la deuxième section (14) au niveau du premier composant de palier.

3. Ensemble formant palier selon la revendication 1 ou 2, dans lequel un bras de levier (16) dépassant de manière radiale ou une roue dentée est disposé(e) au niveau du premier composant de palier au niveau de la deuxième section (14) sur le côté faisant face à la première section (12), qui présente une interface destinée à être couplée à un élément de transmission.

4. Ensemble formant palier selon l'une quelconque des revendications 1 à 3, dans lequel au moins une paroi (15 ; 19) s'étendant de manière radiale par rapport à l'axe central (M) est disposée au niveau du premier composant de palier dans la transition de la première section (12) à la deuxième section (14).

5. Ensemble formant palier selon la revendication 1, dans lequel la paroi de boîtier (50) présente une ouverture (52), par l'intermédiaire de laquelle le premier composant de palier et le deuxième composant de palier sont montés de manière à pouvoir tourner dans le boîtier, dans lequel l'ouverture (52) présente des saillies dirigées de manière radiale vers l'intérieur.

6. Ensemble formant palier selon la revendication 5, dans lequel le deuxième composant de palier présente une section de palier (40) annulaire, qui est logée dans l'ouverture (52) de la paroi de boîtier (50), dans lequel la section de palier (40) annulaire présente une surface de palier (42) périphérique.

7. Ensemble formant palier selon la revendication 6, dans lequel la section de palier (40) annulaire présente au moins une entaille, dans laquelle est logée une paroi (15 ; 19) s'étendant de manière radiale par rapport à l'axe de rotation (D) depuis la transition entre la première section (12) et la deuxième section (14) du premier composant de palier.

8. Ensemble formant palier selon l'une quelconque des revendications 1 à 7, dans lequel le logement (34) du deuxième composant de palier présente au moins une deuxième baguette de serrage, qui s'étend de manière longitudinale par rapport à l'axe de rotation (D) et réduit le logement (34) vers l'intérieur.
